# EUROPÄISCHE PATENTSCHRIFT

(11) **EP 0 695 240 B1**
(45) Veröffentlichungstag und Bekanntmachung des Hinweises auf die Patenterteilung: **20.08.1997**
(21) Anmeldenummer: 94913610.5
(22) Anmeldetag: 19.04.1994
(51) Int. Cl.: B60J 10/08, B60R 13/06, B29C 45/14

(54) **KRAFTFAHRZEUGDICHTUNG**
SEALING STRIP FOR MOTOR VEHICLES
JOINT D'ETANCHEITE POUR VEHICULES A MOTEUR

(30) Priorität: 19.05.1993 DE 9307620 U
(43) Veröffentlichungstag der Anmeldung: 07.02.1996
(73) Patentinhaber: METEOR GUMMIWERKE K.H. BÄDJE GMBH & CO., 31167 Bockenem (DE)
(72) Erfinder: KIRCHMANN, Günter, D-31167 Bockenem (DE); BUCHHOLZ, Hans-Volker, D-31137 Hildesheim (DE); HILL, Alistair, D-31139 Hildesheim (DE)
(74) Vertreter: Kosel, Peter, Dipl.-Ing.
(86) Internationale Anmeldenummer: EP9401201
(87) Internationale Veröffentlichungsnummer: WO9426545

(56) Entgegenhaltungen:
- DE-A- 4 105 032
- DE-B- 1 240 751
- DE-B- 1 293 616
- FR-A- 1 037 480
- FR-A- 2 624 191
- US-A- 3 059 292
- PATENT ABSTRACTS OF JAPAN vol. 11, no. 135 (M-585) 28. April 1987 & JP,A,61 273 920 (SAITO MINORU) 4. Dezember 1986

## Beschreibung

Die Erfindung betrifft eine Kraftfahrzeugdichtung nach dem Oberbegriff des Anspruchs 1.

Es ist bekannt, die meist aus Gummi hergestellte Formdichtung und die Befestigungsschiene aus Kunststoff von unterschiedlichen Herstellern dem Kfz-Hersteller zuzuliefern. Formdichtung und Befestigungsschiene werden sodann im Werk dadurch vormontiert, daß die Formdichtung mit ihren Durchbrechungen auf die Clipse der Befestigungsschiene "aufgeknöpft" wird. Nachfolgend wird diese vormontierte Einheit schließlich mit den aus der Formdichtung herausragenden Köpfen der Clipse in die Verankerungslöcher der Karosserie eingedrückt und darin verriegelt. Nachteilig ist bei dieser bekannten Vorgehensweise der verhältnismäßig hohe Arbeitsaufwand beim Kfz-Hersteller. Die DE 41 05 032 A1 zeigt eine solche bekannte Befestigungsschiene.

Aus der DE 1 293 616 B ist es an sich bekannt, an ein extrudiertes, wasserdichtes, hohles Gummiprofil in einem Formwerkzeug eine Dichtlippe aus Schwammgummi anzugießen. In Öffnungen der freien Fläche des Gummiprofils sind nachträglich die Köpfe von runden Befestigungsbolzen eingedrückt, deren Schäfte durch Aufnahmebohrungen in einem Karosserieblech gepreßt und dort verankert werden. Das Profil ist insgesamt biegeschlaff.

Aus der US 3 059 292 A ist es an sich bekannt, an ein Tragprofil aus einem Elastomer im Abstand voneinander runde Befestigungskegel aus Elastomer anzuformen. In einen axialen Hohlraum jedes Befestigungskegels ist ein Eindrückstift eingesetzt, dessen Kopf sich in ein an dem Tragprofil befestigtes Dichtprofil aus Schaum- oder Schwammgummi erstreckt. Das fertige Profil ist biegeschlaff und wird dadurch montiert, daß jeder Befestigungskegel in eine Aufnahmebohrung eines Karosserieblechs eingesetzt wird. Sodann wird mit einem Finger an der Befestigungsstelle auf den Kopf des Eindrückstifts gedrückt, bis eine Hinterschneidung des Befestigungskegels in die Aufnahmebohrung einschnappt.

Der Erfindung liegt die Aufgabe zugrunde, den Montageaufwand beim Kfz-Hersteller herabzusetzen und die Kraftfahrzeugdichtung zu verbessern.

Diese Aufgabe ist durch die Merkmale des Anspruchs 1 gelöst. Die feste Verbindung der Befestigungsschiene mit der Formdichtung geschieht bei den Zulieferern des Kfz-Herstellers, so daß dieser es nur mit der Handhabung und Montage der fertigen Kraftfahrzeugdichtung zu tun hat. Durch die feste Verbindung von Befestigungsschiene und Formdichtung miteinander ist deren Lage zueinander optimal zu gestalten.

Die Merkmale des Anspruchs 2 führen auf der gesamten Länge der Kraftfahrzeugdichtung zu einer positionsgenauen und dichten Verbindung zwischen der Befestigungsschiene und der Formdichtung.

Gemäß Anspruch 3 sind die Clipse in ihrer Funktion in keiner Weise durch die Formdichtung beeinträchtigt. Dies ist beim Stand der Technik nicht immer gewährleistet, weil dort in dem vormontierten Zustand der Kraftfahrzeugdichtung die Formdichtung schon über die Wände der Verankerungslöcher gehalten werden muß.

Die Merkmale des Anspruchs 4 führen zu einer wünschenswerten Versteifung der Kraftfahrzeugdichtung zwischen benachbarten Clipsen. Dennoch stören die Versteifungsrippen in keiner Weise, da sie in vollem Umfang in die Formdichtung eingebettet sind und daher nach außen nicht in Erscheinung treten.

Die Merkmale des Anspruchs 5 verleihen der Befestigungsschiene besondere Festigkeit.

Die Stoffe gemaß den Ansprüchen 5 bis 15 bieten je nach dem Einsatzfall besondere Vorteile.

Gemäß Anspruch 16 ist sicherzustellen, daß bei der Anformung der Formdichtung an die Befestigungsschiene kein Material der Formdichtung in den für die Clipse gewünschten Freiraum eindringen kann.

Mit den Merkmalen des Anspruchs 17 läßt sich dieses Freihalten besonders sicher erreichen.

Weitere Merkmale und Vorteile der Erfindung werden nachfolgend anhand des in den Zeichnungen dargestellten Ausführungsbeispiels näher erläutert. Es zeigt:
Fig. 1 einen Querschnitt durch eine in einem Formwerkzeug befindliche Kraftfahrzeugdichtung,
Fig. 2 eine Seitenansicht einer in Fig. 1 verwendeten Befestigungsschiene in verkleinerter Darstellung,
Fig. 3 die Draufsicht auf die Befestigungsschiene gemäß Fig. 2,
Fig. 4 die Schnittansicht nach Linie IV-IV in Fig. 2 in vergrößerter Darstellung,
Fig. 5 die Schnittansicht nach Linie V-V in Fig. 2 in vergrößerter Darstellung,
Fig. 6 die Schnittansicht nach Linie VI-VI in Fig. 3 in vergrößerter Darstellung und
Fig. 7 die Ansicht VII in Fig. 6.

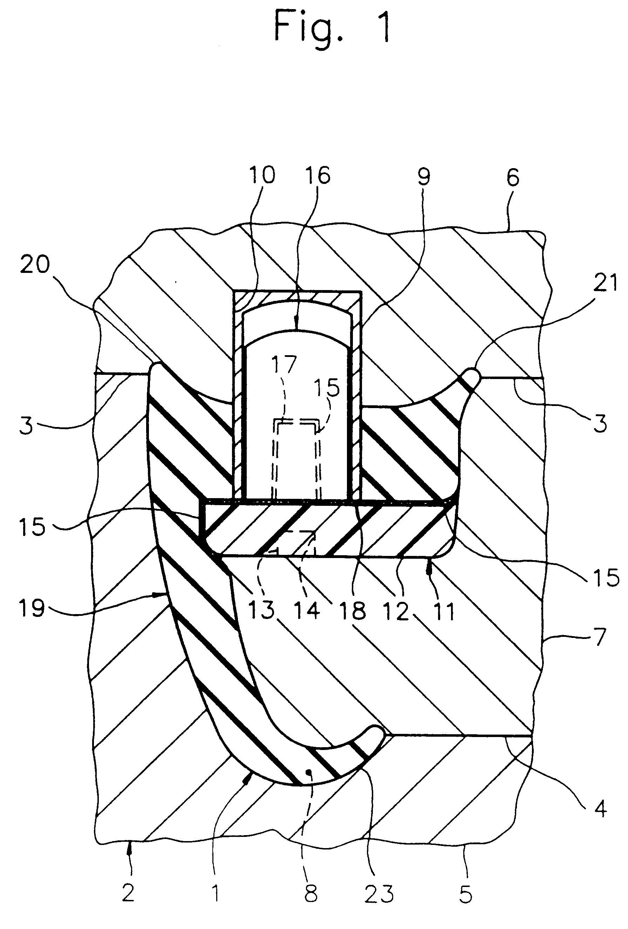

Fig. 1 zeigt eine Kraftfahrzeugdichtung 1 nach ihrer Herstellung in einem Formwerkzeug 2.

Das Formwerkzeug 2 ist längs Teilungsebenen 3 und 4 in ein stationäres Formunterteil 5, ein hab- und senkbares Formoberteil 6 und einen zwischen Formunterteil 5 und Formoberteil 6 angeordneten, ebenfalls hab- und senkbaren Einsatz 7 unterteilt.

Zwischen den Formteilen 5 bis 7 ist eine Formausnehmung 8 definiert, welche die Außenkontur der Kraftfahrzeugdichtung 1 bestimmt. In die Formausnehmung 8 ragt von oben her eine Glocke 9, die in einer Aufnahmeöffnung 10 des Formoberteils 6 befestigt ist.

Fig. 1 zeigt das Formwerkzeug 2 in seiner geschlossenen Betriebsstellung. Zur Herstellung der Kraftfahrzeugdichtung 1 ist zunächst das Formoberteil 6 angehoben und der Einsatz 7 abgesenkt, bis er das Formunterteil 5 längs der Teilungsebene 4 berührt. Sodann wird eine aus Kunststoff vorgefertigte Befestigungsschiene 11 mit einer Basis 12 von oben in die Formausnehmung 8 auf den Einsatz 7 eingelegt. Dabei greifen wenigstens zwei im Abstand voneinander angeordnete Positionierstifte 13 des Einsatzes 7 in entsprechende Positionierbohrungen 14 der Basis 12 und sorgen für einwandfreie Positionierung der Befestigungsschiene 11 in der Formausnehmung 8.

An ihrer Oberseite ist die Basis 12 mit einer Kupplungsschicht 15 und mit im Abstand voneinander angeordneten Clipsen 16 versehen. Zwischen benachbarten Clipsen 16 ist an die Basis 12 jeweils eine Versteifungsrippe 17 angeformt. Jede Versteifungsrippe 17 ist ebenfalls mit der Kupplungsschicht 15 überzogen, die sehr dünn gehalten werden kann.

Sodann wird das Formoberteil 6 abgesenkt, wobei die Glocken 9 jeweils den zugehörigen Clip 16 übergreifen und mit ihrem unteren, freien Rand 18 abdichtend an die Kupplungsschicht 15 und damit an die Basis 12 angepreßt werden. Die Abwärtsbewegung des Formoberteils 6 setzt sich fort, bis es längs der Teilungsebene 3 auf das Formunterteil 5 und den Einsatz 7 aufsetzt. Damit ist das Formwerkzeug geschlossen. In den verbliebenen Rest der Formausnehmung 8 wird nun Gummi eingespritzt und bildet eine Formdichtung 19 der Kraftfahrzeugdichtung 1. Durch Vermittlung der Kupplungsschicht 15 wird die Formdichtung 19 fest an die Basis 12 und die Versteifungsrippen 17 anvulkanisiert. Sobald dieser Vorgang abgeschlossen ist, wird das Formoberteil 6 angehoben. Dabei werden die unteren Bereiche der Glocken 9 aus der Formdichtung 19 herausgezogen. Sodann wird der Einsatz 7 mitsamt der Kraftfahrzeugdichtung 1 soweit angehoben, daß die Kraftfahrzeugdichtung 1 aus dem Formwerkzeug 2 entnommen werden kann.

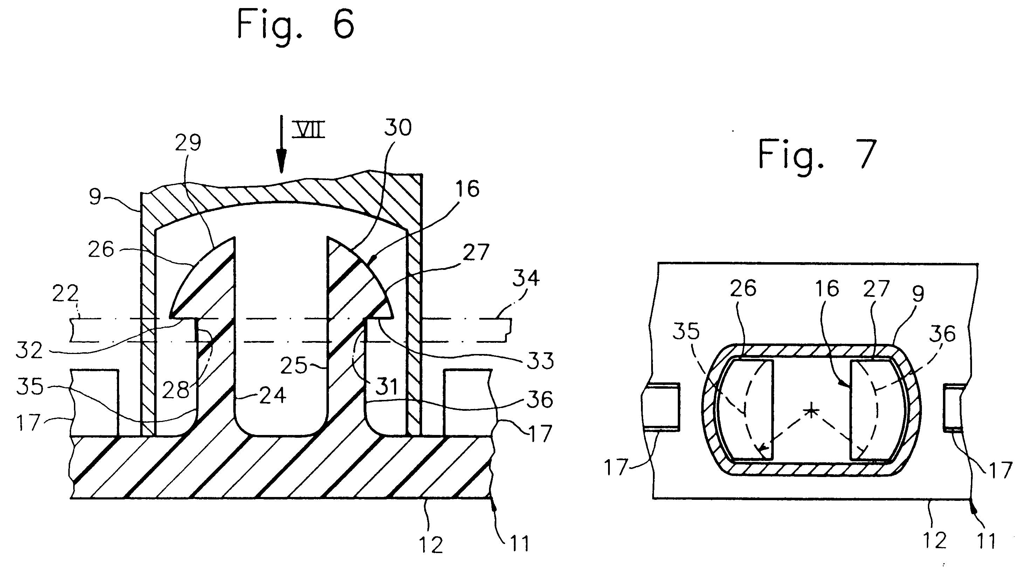

Bei der Kraftfahrzeugdichtung 1 handelt es sich in diesem Beispiel um eine Türdichtung. Die Formdichtung 19 ist an ihrer, beim späteren Einbau einer Säule der Karosserie zugewandten Seite mit durchlaufenden Dichtnasen 20 und 21 versehen. Die Dichtnasen 20, 21 werden beim Einbau der Kraftfahrzeugdichtung an dem Karosserieblech 22 (Fig. 6) zur Erzielung der gewünschten Dichtwirkung deformiert und liegen an dem Karosserieblech unter Vorspannung im eingebauten Zustand an, in dem die Clipse 16 gemäß Fig. 6 das Karosserieblech 22 verriegelnd hintergreifen.

Gemäß Fig. 1 weist die Formdichtung 19 außerdem eine Dichtlippe 23 auf, an die sich später im eingebauten Zustand der Kraftfahrzeugdichtung 1 eine Tür unter Deformation der Dichtlippe 23 anlegt.

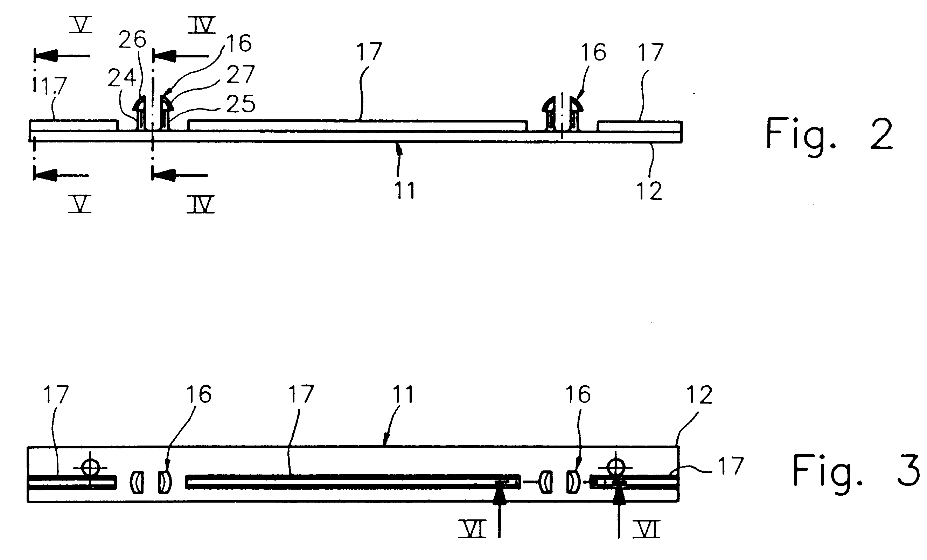

Die Fig. 2 und 3 zeigen Einzelheiten der Befestigungsschiene 11 in Seitenansicht und Draufsicht.

Jeder Clip 16 weist zwei im Abstand voneinander an der Basis 12 angeformte Schenkel 24 und 25 auf, die an ihrem freien Ende jeweils einen Verriegelungskopf 26 und 27 tragen. Die Schenkel 24, 25 sind federnd ausgebildet, so daß sie sich elastisch aufeinander zu und voneinander weg bewegen können.

Die Versteifungsrippen 17 sind nicht nur zwischen benachbarten Clipsen 16, sondern auch außerhalb der äußersten Clipse 16 der Befestigungsschiene 11 vorgesehen.

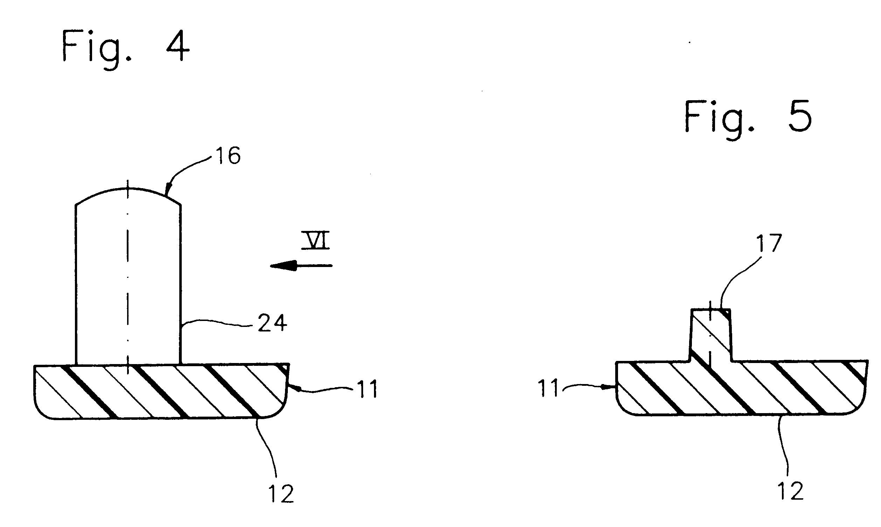

Die Fig. 4 bis 7 zeigen weitere Einzelheiten, insbesondere der Befestigungsschiene 11.

Gemäß Fig. 6 weist das Karosserieblech 22 für jeden Clip 16 ein in diesem Fall kreisrundes Verankerungsloch 28 auf. Die Verriegelungsköpfe 26, 27 sind widerhakenartig ausgebildet. Wenn der Clip 16 in Fig. 6 von unten her durch das Verankerungsloch 28 hindurchgedrückt wird, gleiten äußere Schrägflächen 29 und 30 der Verriegelungsköpfe 26, 27 entlang einer äußeren Kante 31 des Verankerungsloches 28. Dabei werden die Schenkel 24, 25 zunehmend aufeinander zu gebogen, bis der größte Durchmesser der Schrägflächen 29, 30 das Verankerungsloch 28 passiert hat und die Verriegelungsköpfe 26, 27 mit radialen Verriegelungsflächen 32 und 33 hinter eine Innenfläche 34 des Karosserieblechs 22 schnappen. Dieses Hinterschnappen geschieht aufgrund der elastischen Rückstellkräfte der Schenkel 24, 25.

In Fig. 6 und 7 ist jeweils die Glocke 9 des Formwerkzeugs 2 angedeutet.

Fig. 7 verdeutlicht, daß die Verriegelungsköpfe 26, 27 jeweils außen mit einer kreiszylindrischen Anlagefläche 35 und 36 versehen sind, die sich in der verriegelten Stellung gemäß Fig. 6 an die Innenfläche des kreisförmigen Verankerungslochs 28 anlegen.

## Patentansprüche

1. Kraftfahrzeugdichtung (1), mit einer elastischen Formdichtung (19) mit Durchbrechungen, durch die hindurch sich Clipse (16) einer mit den Clipsen (16) einstückig aus Kunststoff gefertigten Befestigungsschiene (11) in Verankerungslöcher (28) einer Karosserie (22) erstrecken,
dadurch gekennzeichnet, daß die Befestigungsschiene (11) mit der Formdichtung (19) fest verbunden ist.

2. Kraftfahrzeugdichtung nach Anspruch 1, dadurch gekennzeichnet, daß die Formdichtung (19) in einem Formwerkzeug (2) an die in das Formwerkzeug (2) eingelegte Befestigungsschiene (11) angespritzt und anvulkanisiert ist.

3. Kraftfahrzeugdichtung nach Anspruch 1 oder 2, dadurch gekennzeichnet, daß die Clipse (16) sich in allen Betriebszuständen in allseitigem Abstand von der Formdichtung (19) befinden.

4. Kraftfahrzeugdichtung nach einem der Ansprüche 1 bis 3, dadurch gekennzeichnet, daß jeweils zwischen benachbarten Clipsen (16) eine Versteifungsrippe (17) an die Befestigungsschiene (11) angeformt und in die Formdichtung (19) eingeformt ist.

5. Kraftfahrzeugdichtung nach einem der Ansprüche 1 bis 4, dadurch gekennzeichnet, daß die Befestigungsschiene (11) aus ggf. glasfaserverstärktem Polyamid besteht.

6. Kraftfahrzeugdichtung nach einem der Ansprüche 1 bis 4, dadurch gekennzeichnet, daß die Befestigungsschiene (11) aus Polyphenylenether (PPE) besteht.

7. Kraftfahrzeugdichtung nach einem der Ansprüche 1 bis 6, dadurch gekennzeichnet, daß die Formdichtung (19) aus einem EPDM-Moosgummi oder -Weichgummi besteht.

8. Kraftfahrzeogdichtung nach einem der Ansprüche 1 bis 6, dadurch gekennzeichnet, daß die Formdichtung (19) aus einem thermoplastischen Elastomer (TPE) besteht.

9. Kraftfahrzeugdichtung nach Anspruch 8, dadurch gekennzeichnet, daß die Formdichtung (19) aus einem thermoplastischen Elastomer auf der Basis Styrol Ethylen Butylen Styrol (S-EB-S) besteht.

10. Kraftfahrzeugdichtung nach Anspruch 8, dadurch gekennzeichnet, daß die Formdichtung (19) aus einem thermoplastischen Elastomer auf der Basis Styrol Butadien Styrol (SBS) besteht.

11. Kraftfahrzeugdichtung nach Anspruch 8, dadurch gekennzeichnet, daß die Formdichtung (19) aus einem thermoplastischen Elastomer auf der Basis Styrol Isopren Styrol (SIS) besteht.

12. Kraftfahrzeugdichtung nach Anspruch 8, dadurch gekennzeichnet, daß die Formdichtung (19) aus einem thermoplastischen Elastomer auf der Basis von Elastomerlegierungen als TPO-Blends oder TPO-Alloys, z.B. von vernetztem EPDM/Propylen-Blend (EPDM/PP) oder Ethylenvenylacetat/Vinylidenchlorid (EVA/PVDC), besteht.

13. Kraftfahrzeugdichtung nach Anspruch 8, dadurch gekennzeichnet, daß die Formdichtung (19) aus einem thermoplastischen Elastomer auf der Basis von thermoplastischen Polyurethanen (TPU) besteht.

14. Kraftfahrzeugdichtung nach einem der Ansprüche 1 bis 13, dadurch gekennzeichnet, daß zwischen der Befestigungsschiene (11) und der Formdichtung (19) eine Kupplungsschicht (15) angeordnet ist.

15. Kraftfahrzeugdichtung nach Anspruch 14, dadurch gekennzeichnet, daß die Kupplungsschicht (15) aus einem Polypropylenprimer besteht.

16. Formwerkzeug (2) zur Herstellung einer Kraftfahrzeugdichtung (1) nach einem der Ansprüche 1 bis 15, dadurch gekennzeichnet, daß das Formwerkzeug (2) geteilt ist und eine Formausnehmung (8) aufweist,
daß die Befestigungsschiene (11) in die Formausnehmung (8) einlegbar ist,
und daß an einem Formteil (6) für jeden Clip (16) eine sich bei geschlossenem Formwerkzeug (2) in die Formausnehmung (8) erstreckende, den Clip (16) dicht umschließende Glocke (9) angeordnet ist.

17. Formwerkzeug nach Anspruch 16, dadurch gekennzeichnet, daß bei geschlossenem Formwerkzeug (2) jede Glocke (9) mit ihrem freien Rand (18) in dichte Berührung mit einer die Clipse (16) tragenden Basis (12) der Befestigungsschiene (11) gepreßt ist.

## Claims

1. Vehicle seal (1) comprising an elastic moulded seal (19) with holes through which clips (16) on a fastening rail (11) made of plastics material extend to be received in anchoring holes (28) in vehicle bodywork (22), characterised in that the fastening rail (11) is fixedly connected to the moulded seal (19).

2. Vehicle seal according to claim 1, characterised in that in a moulding tool (2) the moulded seal (19) is injected on to and vulcanised to the fastening rail (11) which is laid within the moulding tool (2).

3. Vehicle seal according to claim 1 or 2, characterised in that the clips (16) are located with all-round spacing from the moulded seal (19) in all operational states.

4. Vehicle seal according to one of claim 1 to 3, characterised in that between each adjacent pair of clips (16) there is provided a reinforcing rib (17) on the fastening rail (11) with the ribs being embedded in the moulded seal (19).

5. Vehicle seal according to one of claims 1 to 4, characterised in that the fastening rail (11) consists of polyamide, if need be glass fibre reinforced polyamide.

6. Vehicle seal according to one of claims 1 to 4, characterised in that the fastening rail (11) consists of polyphenylene ether (PPE).

7. Vehicle seal according to one of claims 1 to 6, characterised in that the moulded seal (19) consists of an EPDM expanded rubber or an EPDM soft rubber.

8. Vehicle seal according to one of claims 1 to 6, characterised in that the moulded seal (19) consists of a thermoplastic elastomer (TPE).

9. Vehicle seal according to claim 8, characterised in that the moulded seal (19) consists of a thermoplastic elastomer based upon styrene ethylene butylene styrene (S-EB-S).

10. Vehicle seal according to claim 8, characterised in that the moulded seal (19) consists of a thermoplastic elastomer based upon styrene butadiene styrene (SBS).

11. Vehicle seal according to claim 8, characterised in that the moulded seal (19) consists of a thermoplastic elastomer based upon styrene isoprene styrene (SIS).

12. Vehicle seal according to claim 8, characterised in that the moulded seal (19) consists of a thermoplastic elastomer based upon elastomer combinations as TPO blends or TPO alloys, for example of cross-linked EPDM/propylene blend (EPDM/PP) or ethylene vinyl acetate/vinylidene chloride (EVA/PVDC).

13. Vehicle seal according to claim 8, characterised in that the moulded seal (19) consists of a thermoplastic elastomer based upon thermoplastic polyurethane (TPU).

14. Vehicle seal according to one of claims 1 to 13, characterised in that a coupling layer (15) is provided between the fastening rail (11) and the moulded seal (19).

15. Vehicle seal according to claim 14, characterised in that the coupling layer (15) consists of a polypropylene primer.

16. Moulding tool (2) for the manufacture of a vehicle seal (1) as claimed in one of claims 1 to 15, characterised in that the moulding tool (2) is divided and includes a moulding recess (8), that the fastening rail (11) is arranged to be laid in the moudling recess (8), and that on one mould part (6), for each clip (16), there is arranged a bell-shaped cap (9) which sealingly encloses the clip (16) and which extends into the moulding recess (8) when the moulding tool (2) is closed.

17. Moulding tool according to claim 16, characterised in that, with the moulding tool (2) closed, each cap (9) has its free edge (18) pressed into sealing contact with a base (12) of the fastening rail (11) which carries the clips (16).

## Revendications

1. Joint d'étanchéité (1) pour véhicule à moteur, comprenant un joint profilé (19) avec des découpes par lesquelles des clips (16) d'un rail de fixation (11) en matière synthétique, fabriqué d'une seule pièce avec les clips (16), pénètrent dans des trous d'ancrage (28) d'une carrosserie (22),
caractérisé en ce que le rail de fixation (11) est lié à demeure avec le joint profilé (19).

2. Joint d'étanchéité pour véhicule à moteur selon la revendication 1, caractérisé en ce que le joint profilé (19) est injecté et vulcanisé dans un outil de formage (2) sur le rail de fixation (11) inséré dans l'outil de formage (2).

3. Joint d'étanchéité pour véhicule à moteur selon l'une des revendications 1 ou 2, caractérisé en ce que les clips (16) se trouvent dans tous les états de fonctionnement à distance de tout côté du joint profilé (19).

4. Joint d'étanchéité pour véhicule à moteur selon l'une des revendications 1 à 3, caractérisé en ce que, respectivement entre deux clips (16) voisins, une nervure raidisseuse (17) est formée sur le rail de fixation (11) et moulée dans le joint profilé (19).

5. Joint d'étanchéité pour véhicule à moteur selon l'une des revendications 1 à 4, caractérisé en ce que le rail de fixation (11) est composé éventuellement de polyamide renforcée par des fibres de verre.

6. Joint d'étanchéité pour véhicule à moteur selon l'une des revendications 1 à 4, caractérisé en ce que le rail de fixation (11) est composé de polyphénylèneéther (PPE).

7. Joint d'étanchéité pour véhicule à moteur selon l'une des revendications 1 à 6, caractérisé en ce que le joint profilé (19) est composé d'un caoutchouc spongieux ou mou EPDM.

8. Joint d'étanchéité pour véhicule à moteur selon l'une des revendications 1 à 6, caractérisé en ce que le joint profilé (19) est composé d'un élastomère thermoplastique (TPE).

9. Joint d'étanchéité pour véhicule à moteur selon la revendication 8, caractérisé en ce que le joint profilé (19) est composé d'un élastomère thermoplastique à base de styrène éthylène butylène styrène (S-EB-S).

10. Joint d'étanchéité pour véhicule à moteur selon la revendication 8, caractérisé en ce que le joint profilé (19) est composé d'un élastomère thermoplastique à base de styrène butadiène styrène (SBS).

11. Joint d'étanchéité pour véhicule à moteur selon la revendication 8, caractérisé en ce que le joint profilé (19) est composé d'un élastomère thermoplastique à base de styrène isoprène styrène (SIS).

12. Joint d'étanchéité pour véhicule à moteur selon la revendication 8, caractérisé en ce que le joint profilé (19) est composé d'un élastomère thermoplastique à base d'alliages élastomères tels que des mélanges TPO ou des alliages TPO, par exemple un mélange EPDM/propylène réticulé ou éthylène-acétate de vinyle/chlorure de vinyle (EVA/PVDC).

13. Joint d'étanchéité pour véhicule à moteur selon la revendication 8, caractérisé en ce que le joint profilé (19) est composé d'un élastomère thermoplastique à base de polyuréthanes thermoplastiques (TPU).

14. Joint d'étanchéité pour véhicule à moteur selon l'une des revendications 1 à 13, caractérisé en ce qu'une couche d'accouplement (15) est placée entre le rail de fixation (11) et le joint profilé (19).

15. Joint d'étanchéité pour véhicule à moteur selon la revendication 14, caractérisé en ce que la couche d'accouplement (14) est composée d'une couche d'impression en polypropylène.

16. Outil de formage (2) pour la fabrication d'un joint d'étanchéité (1) pour véhicule à moteur selon l'une des revendications 1 à 15, caractérisé en ce qu'il est en plusieurs pièces et présente un creux de formage (8),
en ce que le rail de fixation (11) peut être inséré dans le creux de formage (8),
en ce que, dans une pièce de formage (6) pour chaque clip (16), est disposée une cloche (9) entourant de manière étanche le clip (16) et s'étendant dans le creux de formage (8), lorsque l'outil de formage (2) est fermé.

17. Outil de formage selon la revendication 16, caractérisé en ce que, lorsqu'il est fermé, chaque cloche (9) est pressée par son bord libre (18) en contact étroit avec une base (12) du rail de fixation (11) portant les clips (16).
